# EUROPÄISCHE PATENTSCHRIFT

(11) **EP 1 123 834 B1**
(45) Veröffentlichungstag und Bekanntmachung des Hinweises auf die Patenterteilung: **20.10.2004**
(21) Anmeldenummer: 01102704.2
(22) Anmeldetag: 06.02.2001
(51) Int. Cl.: B60N 2/56

(54) **Sitzpolsterteil für Fahrzeugsitze**
Seat padding element for vehicle seats
Elément de rembourrage de siège pour sièges de véhicules

(30) Priorität: 12.02.2000 DE 20002540 U
(43) Veröffentlichungstag der Anmeldung: 16.08.2001
(73) Patentinhaber: Johnson Controls GmbH, 51399 Burscheid (DE)
(72) Erfinder: Hartwich, Dirk, 42399 Wuppertal (DE); Winkelhake, Bernd, 38446 Wolfsburg (DE)
(74) Vertreter: Kutzenberger, Helga, Dr.

(56) Entgegenhaltungen:
- WO-A-96/05475
- DE-A- 19 830 797
- US-A- 5 626 386
- US-A- 5 921 100
- US-A- 5 924 766
- US-A- 6 019 420

## Beschreibung

Die vorliegende Erfindung betrifft ein Sitzpolsterteil für Fahrzeugsitze, mit einem Formteil aus einem luftdurchlässigen Material und einer auf einer Rückseite des Formteils angeordneten Belüftungseinrichtung, die ein auf der Rückseite des Formteils außermittig angeordnetes Anschlußteil für einen Lüfter aufweist (s. zum Beispiel DE-196 28 698 C1).

Derartige Polsterteile sind bekannt. Sie werden für sogenannte Klimasitze für untere Sitzflächenteile und/oder Rückenlehnen eingesetzt. Die Belüftungseinrichtung sorgt mittels eines elektromotorisch angetriebenen Lüfters für eine Luftdurchströmung des Polsterteils, wodurch ein angenehmes Sitzklima erreicht wird. Bei manchen Fahrzeugsitzen war bisher eine solche Belüftung nicht möglich, weil hinter oder unter dem Polsterteil bestimmte andere Einrichtungen angeordnet sind, wie beispielsweise eine Lordosenstütze (verstellbare Lendenwirbelabstützung) bei einer Rückenlehne.

Der vorliegenden Erfindung liegt die Aufgabe zugrunde, ein Sitzpolsterteil mit Belüftungseinrichtung zu schaffen, welches für ein breiteres Anwendungsspektrum geeignet ist, insbesondere auch für Sitze, bei denen auf der Rückseite bzw. auf der Unterseite des Polsterteils andere Zusatzeinrichtungen plaziert werden sollen.

Erfindungsgemäß wird dies dadurch erreicht, dass das Anschlußteil der Belüftungseinrichtung derart im Bereich eines über die Rückseite verlaufenden Umlaufkanals angeordnet ist, dass mittels des Lüfters über das Anschlußteil zugeführte Luft zunächst in den Umlaufkanal einströmt und sich von dort in das Formteil hinein und durch das Formteil hindurch zu dessen Vorderseite hin verteilt.

Durch die erfindungsgemäß außermittige Anordnung des Lüfter-Anschlußteils steht der mittlere Flächenbereich auf der Rückseite des Polsterteils vorteilhafterweise für nahezu beliebige Zusatzeinrichtungen, insbesondere eine verstellbare Lordosenstütze, zur Verfügung. Dennoch wird eine sehr gute und gleichmäßige Luftverteilung erreicht, indem die durch den Lüfter geförderte Luft sich in den Umlaufkanal hinein verteilt. Durch einen bestimmten, insbesondere symmetrisch über die Fläche verteilten Verlauf des Umlaufkanals erfolgt schon über diesen eine gute Verteilung der Luft über die Fläche des Polsterteils. In dem Umlaufkanal entsteht ein geringer Überdruck, durch den sich dann die Luft aus dem Umlaufkanal sehr gleichmäßig in das luftdurchlässige Polstermaterial des Formteils hinein in Richtung der Vorderseite verteitt und dort in sehr gleichmäßiger Flächenverteilung austritt.

Weitere vorteilhafte Ausgestaltungsmerkmale der Erfindung sind in den Unteransprüchen enthalten.

Anhand eines in der Zeichnung skizzenhaft dargestellten Ausführungsbeispiels soll die Erfindung genauer erläutert werden. Dabei zeigen:
- Fig. 1: einen Vertikalschnitt durch einen mit einem erfindungsgemäßen Sützpolsterteil ausgestatteten Fahrzeugsitz,
- Fig. 2: eine Draufsicht auf die Rückseite des Sitzpolsterteils in Pfeilrichtung II gemäß Fig. 1 und
- Fig. 3: einen vergrößerten Teilschnitt in der Ebene III-III gemäß Fig. 2.

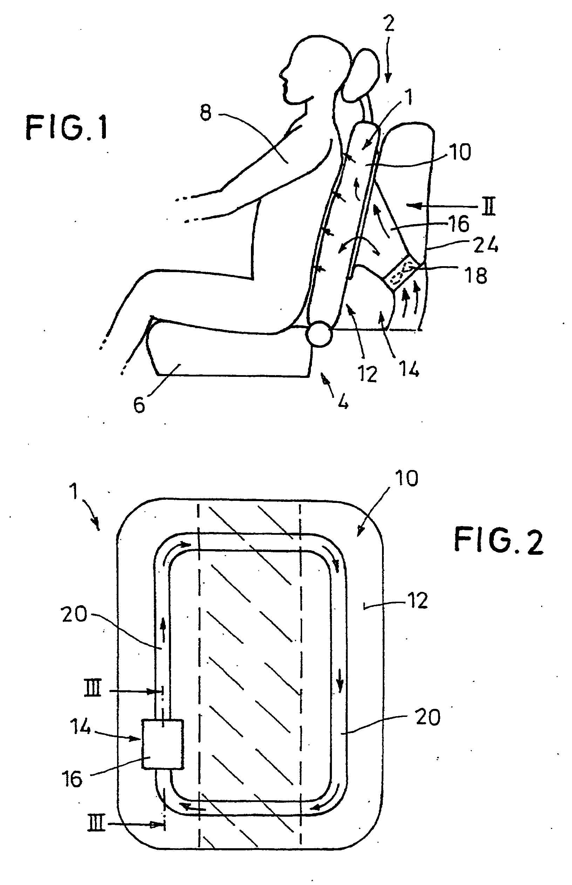

Wie sich zunächst aus Fig. 1 ergibt, ist ein erfindungsgemäßes Sitzpolsterteil 1 insbesondere in einer Rückenlehne 2 eines Fahrzeugsitzes 4 angeordnet. Der Fahrzeugsitz 4 weist ferner ein unteres Sitzteil 6 als Sitzfläche für eine Person 8 auf. Das Sitzpolsterteil 1 besteht aus einem Formteil 10 mit hoher Luftdurchlässigkeit, wobei auf einer Rückseite 12 des Formteils 10 eine Belüftungseinrichtung 14 angeordnet ist.

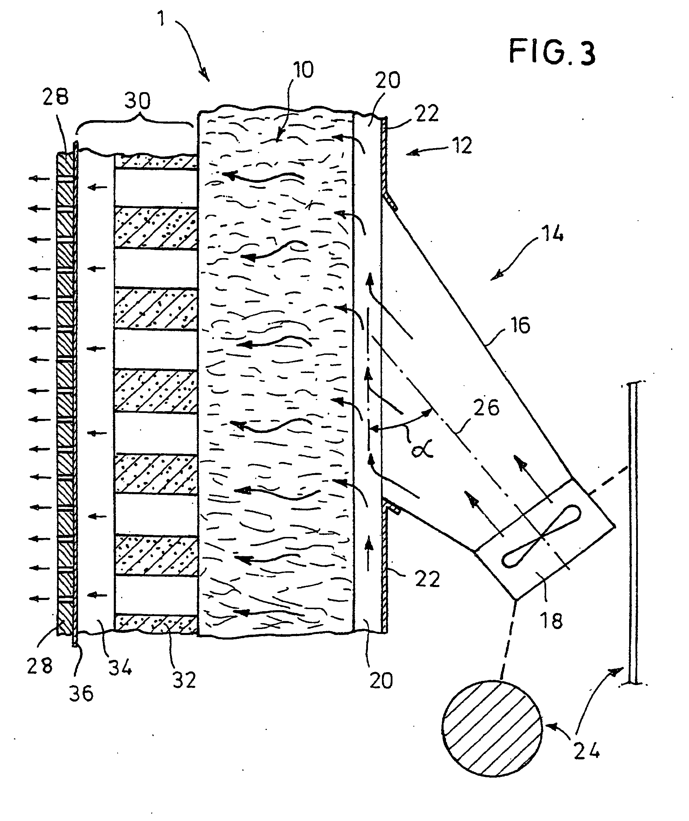

Wie sich insbesondere aus Fig. 2 und 3 ergibt, weist die Belüftungseinrichtung 14 erfindungsgemäß ein auf der Rückseite 12 des Formteils 10 außermittig angeordnetes Anschlußteil 16 für einen Lüfter 18 auf. Das Anschlußteil 16 ist derart im Bereich eines über die Rückseite 12 verlaufenden Umlaufkanals 20 angeordnet, dass mittels des Lüfters 18 über das Anschlußteil 16 zugeführte Luft zunächst in den Umlaufkanal 20 einströmt und sich von dort aus in das luftdurchlässige Polstermaterial des Formteils 10 hinein zu dessen Vorderseite hin verteilt.

Gemäß Fig. 2 verläuft der Umlaufkanal 20 mit im wesentlichen gleichbleibendem Randabstand derart symmetrisch über die Rückseite 12 des Formteils 10, dass sich die Luft ausgehend von dem Umlaufkanal 20 gleichmäßig über die gesamte Fläche des Formteils 10 zu dessen Vorderseite hin verteilt.

Gemäß Fig. 3 ist der Umlaufkanal 20 zweckmäßigerweise als eine nut- oder rillenartige, umlaufende Vertiefung auf der Rückseite 12 des Formteils 10 gebildet, wobei der Kanal zur offenen Rückseite 12 hin durch eine luftdichte Schicht 22 abgedeckt ist. Die luftdichte Schicht 22 kann eine Folie aus einem geeigneten Kunststoff sein, die dann insbesondere die gesamte Rückseite 12 des Formteils 10 überdeckt und dabei auch luftdicht den Anschlußbereich des Anschlußteils 16 umschließt. Durch die luftdichte Schicht 22 (Fig. 3) wird vermieden, dass die zugeführte Luft nach hinten entweicht, vielmehr wird sichergestellt, dass die Luft auch tatsächlich in Richtung der Vorderseite strömt.

Wie sich weiterhin aus Fig. 1 und 3 ergibt, ist der Lüfter 18 vorzugsweise an einem festen Strukturteil 24 befestigt. Bei dem Strukturteil 24 kann es sich um ein Rahmenteil der Rückenlehne oder auch um ein ortsfestes Karosserieteil (Blech) handeln. Dabei ist zweckmäßigerweise das Anschlußteil 16 zum Ausgleich von Relativbewegungen zwischen dem Lüfter 18 einerseits und dem flexiblen Formteil 10 andererseits als ein flexibles bzw. elastisches Luftkanalelement ausgebildet. Dazu kann das Anschlußteil 16 nach Art eines Faltenbalgs ausgebildet sein und/oder aus einem gummielastischen Material bestehen.

Weiterhin ist gemäß Fig. 3 das Anschlußteil 16 derart gestaltet, dass es eine Luft-Zufuhrachse 26 definiert, die im Übergangsbereich in den Umlaufkanal 20 in dessen Verlaufsrichtung weisend in einem spitzen Winkel α schräg zur Ebene der Rückseite 12 des Formteils 10 ausgerichtet ist. Hierdurch wird ein geringer Strömungswiderstand beim Einblasen der Luft in den Umlaufkanal 20 erreicht.

Das Formteil 10 besteht vorzugsweise aus einem mit einem elastischen Bindemittel verfestigten Fasermaterial (Gewirr aus Fasern und/oder Tierhaaren). Ein für solche Anwendungen vielfach eingesetztes Material ist unter dem Begriff "Gummihaar" bekannt.

In weiterer vorteilhafter Ausgestaltung der Erfindung gemäß Fig. 3 ist das Formteil 10 auf seiner der Belüftungseinrichtung 14 gegenüberliegenden Vorderseite mit einem luftdurchlässigen Bezugmaterial 28 überdeckt. Im dargestellten Beispiel handelt es sich um gelochtes Leder oder Kunstleder, jedoch kann auch ein textiles Material Verwendung finden. Zwischen dem Formteil 10 und dem Bezugmaterial 28 kann noch (mindestens) eine zusätzliche luftdurchlässige Zwischenschicht 30 angeordnet sein. Im dargestellten Beispiel handelt es sich um eine mehrschichtige Zwischenschicht 30, und zwar um eine Lochschaumschicht 32, eine Flächenheizschicht 34 und vorzugsweise eine Vliesschicht 36. Die Flächenheizschicht 34 besteht beispielsweise aus einer umschäumten elektrischen Heizmatte. Die direkt unter dem Bezugmaterial 28 angeordnete Vliesschicht 36 hat vorteilhafterweise eine gewisse Filterwirkung, wodurch vermieden wird, dass eventuelle mit der Luft geförderte Schmutz- oder Staubpartikel auf der Vorderseite aus dem Bezugmaterial 28 austreten und dieses verunreinigen könnten.

## Patentansprüche

1. Sitzpolsterteil (1) für Fahrzeugsitze, mit einem Formteil (10) aus einem luftdurchlässigen Material und einer auf einer Rückseite (12) des Formteils (10) angeordneten Belüftungseinrichtung (14), wobei
die Belüftungseinrichtung (14) ein außermittig auf der Rückseite (12) des Formteils (10) angeordnetes Anschlußteil (16) für einen Lüfter (18) aufweist,
**dadurch gekennzeichnet,**
**dass** das Anschlußteil (16) derart im Bereich eines über die Rückseite (12) verlaufenden Umlaufkanals (20) angeordnet ist, dass mittels des Lüfters (18) über das Anschlußteil (16) zugeführte Luft zunächst in den Umlaufkanal (20) einströmt und sich von dort in und durch das Formteil (10) zu dessen Vorderseite hin verteilt.

2. Sitzpolsterteil nach Anspruch 1,
**dadurch gekennzeichnet,**
**dass** der Umlaufkanal (20) derart symmetrisch über die Rückseite (12) des Formteils (10) verläuft, dass sich die in den Umlaufkanal (20) eingeblasene Luft beim Durchströmen des Formteils (10) gleichmäßig über dessen vordere Fläche verteilt.

3. Sitzpolsterteil nach Anspruch 1 oder 2,
**dadurch gekennzeichnet,**
**dass** der Umlaufkanal (20) als eine nut- oder rillenartige, umlaufende Vertiefung auf der Rückseite (12) des Formteils (10) gebildet und zur offenen Rückseite (12) hin durch eine luftdichte Schicht (22), insbesondere eine Folie, abgedeckt ist.

4. Sitzpolsterteil nach einem der Ansprüche 1 bis 3,
**dadurch gekennzeichnet,**
**dass** das Anschlußteil (16) zum Ausgleich von Relativbewegungen zwischen dem an einem festen Strukturteil (24) befestigten Lüfter (18) einerseits und dem flexiblen Formteil (10) andererseits als ein flexibles bzw. elastisches Luftkanalelement ausgebildet ist.

5. Sitzpolsterteil nach Anspruch 4,
**dadurch gekennzeichnet,**
**dass** das Anschlußteil (16) faltenbalgartig ausgebildet ist und/oder aus einem gummielastischen Material besteht.

6. Sitzpolsterteil nach einem der Ansprüche 1 bis 5,
**dadurch gekennzeichnet,**
**dass** das Anschlußteil (16) derart gestaltet ist, dass es eine Luft-Zufuhrachse (26) definiert, die im Übergangsbereich in den Umlaufkanal (20) in dessen Verlaufsrichtung weisend in einem spitzen Winkel (α) schräg zur Ebene der Rückseite (12) des Formteils (10) ausgerichtet ist.

7. Sitzpolsterteil nach einem der Ansprüche 1 bis 6,
**dadurch gekennzeichnet,**
**dass** das Formteil (10) aus einem mit einem Bindemittel gebunden Fasermaterial, insbesondere aus sogenanntem Gummihaar, besteht.

8. Sitzpolsterteil nach einem der Ansprüche 1 bis 7,
**dadurch gekennzeichnet,**
**dass** das Formteil (10) auf seiner der Belüftungseinrichtung (14) gegenüberliegenden Vorderseite mit einem luftdurchlässigen Bezugsmaterial (28), vorzugsweise mit gelochtem Leder oder Kunstleder, überdeckt ist.

9. Sitzpolsterteil nach Anspruch 8,
**dadurch gekennzeichnet,**
**dass** zwischen dem Formteil (10) und dem Bezugsmaterial (28) mindestens eine luftdurchlässige Zwischenschicht (30) angeordnet ist, insbesondere eine Lochschaumschicht (32), eine Flächenheizschicht (34) und/oder eine Vliesschicht (36).

## Claims

1. Seat cushion part (1) for vehicle seats, having a shaped part (10) of an air-permeable material, and a ventilation device (14) arranged on a rear side (12) of the shaped part (10), the ventilation device (14) having a connecting part (16), which is arranged eccentrically on the rear side (12) of the shaped part (10) and is intended for a fan (18), **characterized in that** the connecting part (16) is arranged in the region of a circulating duct (20), which runs over the rear side (12), in such a manner that air supplied by means of the fan (18) via the connecting part (16) first of all flows into the circulating duct (20) and is distributed from there in and through the shaped part (10) to the front side thereof.

2. Seat cushion part according to Claim 1, **characterized in that** the circulating duct (20) runs symmetrically over the rear side (12) of the shaped part (10) in such a manner that the air blown into the circulating duct (20), as it flows through the shaped part (10), is distributed uniformly over the front surface thereof.

3. Seat cushion part according to Claim 1 or 2, **characterized in that** the circulating duct (20) is formed as a groove- or channel-like, encircling depression on the rear side (12) of the shaped part (10) and is covered towards the open rear side (12) by an airtight layer (22), in particular a film.

4. Seat cushion part according to one of Claims 1 to 3, **characterized in that** the connecting part (16) is designed as a flexible and elastic air duct element in order to compensate for relative movements between the fan (18), which is fastened to a fixed structure part (24), on the one hand, and the flexible shaped part (10), on the other hand.

5. Seat cushion part according to Claim 4, **characterized in that** the connecting part (16) is designed in the manner of an expansion bellows and/or consists of an elastomeric material.

6. Seat cushion part according to one of Claims 1 to 5, **characterized in that** the connecting part (16) is designed in such a manner that it defines an air supply axis (26) which is orientated in the transition region into the circulating duct (20), pointing in the direction in which the latter runs, at an a cute angle (α) obliquely with respect to the plane of the rear side (12) of the shaped part (10).

7. Seat cushion part according to one of Claims 1 to 6, **characterized in that** the shaped part (10) consists of a fibre material, in particular of "rubberized hair", which is bound by a binding agent.

8. Seat cushion part according to one of Claims 1 to 7, **characterized in that** the shaped part (10) is covered on its front side lying opposite the ventilation d evice ( 14) w ith a n air-permeable c overing m aterial (28), preferably with perforated leather or imitation leather.

9. Seat cushion part according to Claim 8, **characterized in that** at least one air-permeable intermediate layer (30), in particular a perforated foam layer (32), a surface heating layer (34) and/or a nonwoven layer (36), is arranged between the shaped part (10) and the covering material (28).

## Revendications

1. Elément de rembourrage de siège (1) pour sièges de véhicules automobiles, comprenant une partie moulée (10) constituée d'un matériau perméable à l'air et un dispositif de ventilation (14) disposé sur un côté arrière (12) de la partie moulée (10), dans lequel le dispositif de ventilation (14) présente une partie de connexion (16) pour un ventilateur (18) disposée de manière excentrée sur le côté arrière (12) de la partie moulée (10),
**caractérisé en ce que**
la partie de connexion (16) est disposée dans la région d'un canal périphérique (20) s'étendant sur le côté arrière (12), de telle sorte que l'air acheminé au moyen du ventilateur (18) par le biais de la partie de connexion (16) s'écoule d'abord dans le canal périphérique (20) et se répartisse depuis celui-ci dans et à travers la pièce moulée (10) vers son côté avant.

2. Elément de rembourrage de siège selon la revendication 1,
**caractérisé en ce que**
le canal périphérique (20) s'étend symétriquement sur le côté arrière (12) de la partie moulée (10) de telle sorte que l'air soufflé dans le canal périphérique (20) se répartisse uniformément lorsqu'il parcourt la partie moulée (10) sur sa surface avant.

3. Elément de rembourrage de siège selon la revendication 1 ou 2,
**caractérisé en ce que**
le canal périphérique (20) est formé en tant que renfoncement périphérique de type rainure ou gorge sur le côté arrière (12) de la partie moulée (10) et est recouvert vers le côté arrière (12) découvert par une couche étanche à l'air (22), notamment une feuille.

4. Elément de rembourrage de siège selon l'une quelconque des revendications 1 à 3,
**caractérisé en ce que**
la partie de connexion (16) pour la compensation des mouvements relatifs entre le ventilateur (18) fixé à une partie structurelle fixe (24) d'une part et la partie moulée flexible (10) d'autre part est réalisée sous forme d'un élément de canal d'air flexible ou élastique.

5. Elément de rembourrage de siège selon la revendication 4,
**caractérisé en ce que**
la partie de connexion (16) est réalisée en forme de soufflet et/ou se compose d'un matériau en plastique élastomère.

6. Elément de rembourrage de siège selon l'une quelconque des revendications 1 à 5,
**caractérisé en ce que**
la partie de connexion (16) est configurée de telle sorte qu'elle définisse un axe d'apport d'air (26) qui est orienté dans la région de passage dans le canal périphérique (20), dans la direction de son écoulement, suivant un angle aigu (α) obliquement par rapport au plan du côté arrière (12) de la partie moulée (10).

7. Elément de rembourrage de siège selon l'une quelconque des revendications 1 à 6,
**caractérisé en ce que**
la partie moulée (10) se compose d'un matériau fibreux lié avec un liant, notamment ce qu'on appelle un matériau en poils en caoutchouc.

8. Elément de rembourrage de siège selon l'une quelconque des revendications 1 à 7,
**caractérisé en ce que**
la partie moulée (10) est recouverte sur son côté avant opposé au dispositif de ventilation (14) d'un matériau de revêtement (28) perméable à l'air, de préférence du cuir piqueté ou du similicuir.

9. Elément de rembourrage de siège selon la revendication 8,
**caractérisé en ce que**
l'on prévoit entre la partie moulée (10) et le matériau de revêtement (28) au moins une couche intermédiaire perméable à l'air (30), notamment une couche en mousse alvéolaire (32), une couche chauffante de surface (34) et/ou une couche en non-tissé (36).
